Europäisches Patentamt

European Patent Office

Office européen des brevets

(19)

(11) Publication number: **0 313 292**
**A2**

## (12) EUROPEAN PATENT APPLICATION

(21) Application number: **88309718.0**

(22) Date of filing: **17.10.88**

(51) Int. Cl.4: **B60T 8/40** , **B60T 8/42**

(30) Priority: **21.10.87 GB 8724608**

(43) Date of publication of application:
**26.04.89 Bulletin 89/17**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Phillips, Mark Ian**
**121 Fox Hollies Road**
**Acocs Green Birmingham(GB)**
Inventor: **Harris, Alan Leslie**
**24 Malvern Road**
**Balsall Common Coventry(GB)**

(74) Representative: **Huntingford, David Ian et al**
**W.P. THOMPSON & CO. Coopers Building**
**Church Street**
**Liverpool L1 3AB(GB)**

(54) **Anti-skid braking systems for vehicles.**

(57) An anti-skid braking system of the type comprising an hydraulic master cylinder (10), a slave cylinder (11) for applying a brake, valve means (12) normally providing a direct connection between the master cylinder (10) and the slave cylinder (11) for normal braking operation, the valve means being actuable so as to block or substantially block the direct connection, a low pressure reservoir (13), the valve means (12) when actuated providing a connection between the slave cylinder (11) and the reservoir (13), an electrically operable pump (14) driven by a motor (15) for returning fluid from the reservoir (13) to the master cylinder (10) and control means (16) for the valve means (12) and the pump (14) which operates on detection of an incipient skid condition to actuate and to deactuate the valve means (12) repeatedly until the incipient skid condition no longer exists and to energise the pump (14). In order to reduce pump noise to a minimum, on at least the first actuation of the valve means (12) the pump (14) is energised for a relatively short variable period calculated to be just sufficient to return previously dumped fluid to the master cylinder circuit. The calculated pump operation period may be variable in accordance with the length of time for which said valve means (12) remains actuated, and also in accordance with the vehicle deceleration.

EP 0 313 292 A2

Fig 1

Fig 2

## ANTI-SKID BRAKING SYSTEMS FOR VEHICLES

This invention relates to anti-skid braking systems for vehicles, of the type comprising an hydraulic master cylinder, at least one slave cylinder for applying a brake, valve means normally providing a direct connection between the master cylinder and the slave cylinder for normal braking operation, said valve means being actuable so as to block or substantially block said direct connection, a reservoir, said valve means when actuated providing a connection between the slave cylinder and the reservoir, an electrically operable pump for returning fluid from the reservoir to the master cylinder and control means for said valve means and said pump which operates on detection of an incipient skid condition to actuate and to deactuate said valve means repeatedly until said incipient skid condition no longer exists and to energise said pump.

EP-A-202845 describes a known braking system in which, on detection of an incipient skid condition, valve means connected between an hydraulic master cylinder and at least one brake-applying slave cylinder is operated to block (or substantially block) the connection between the master and slave cylinders and also to allow pressurised brake fluid in the slave cylinder to escape to a low pressure reservoir. At the same time an electrically powered pump is started which is connected to return fluid from the reservoir to the master cylinder.

In a real anti-skid braking operation the valve means will be actuated and deactuated repeatedly, causing the brake to be disengaged when the valve means is actuated and then to be relatively slowly re-engaged when the valve is deactuated. This is achieved by the pump scavenging the dumped fluid from the low pressure reservoir and returning it, under pressure, to the master cylinder circuit. The master cylinder then returns the fluid to the brake(s) at a rate determined either by a flow valve or pulsed solenoid in the valve means. The pump is therefore allowed to run throughout this operation and then to continue to run for a relatively long fixed time following the last valve actuation to ensure that all fluid dumped to the low pressure reservoir is returned to the system.

It can sometimes occur, however, that what initially appears to be an incipient skid condition is not, for example when a wheel of the vehicle encounters a single irregularity in an otherwise good road surface. As it is important to commence an anti-skid operation as early as possible, such an operation will be commenced in these circumstances, but then terminated very soon afterwards.

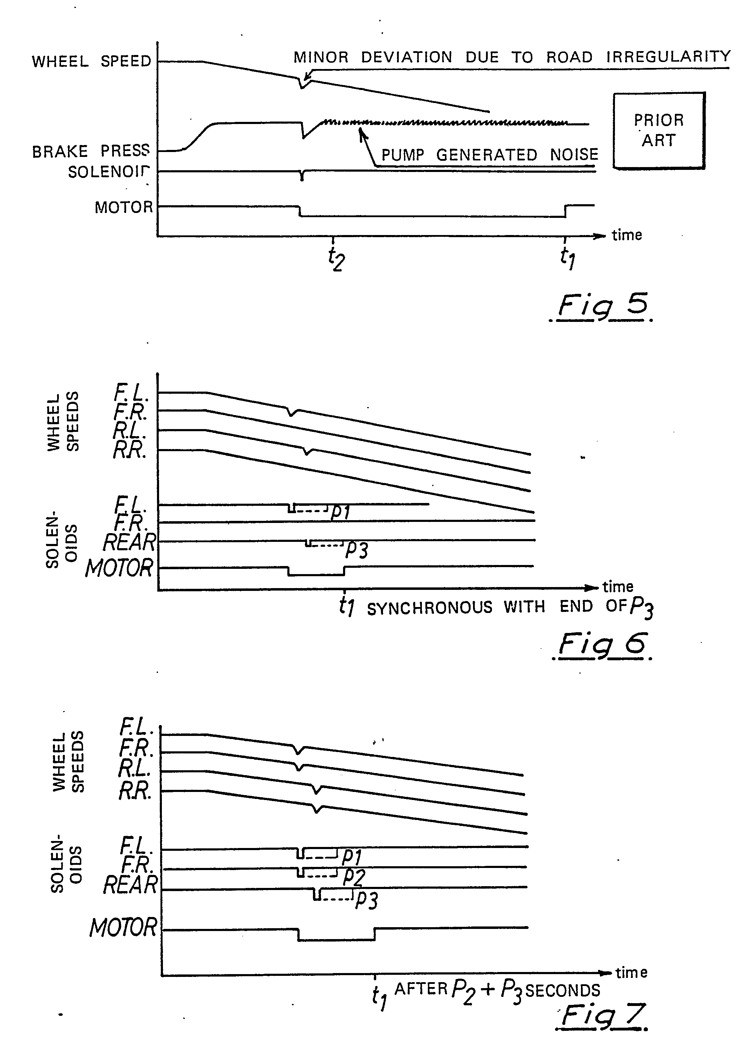

In the known systems, pump operation is commenced in these circumstances and is allowed to continue for the normal, relatively long fixed time after the valve actuation. This is illustrated in Fig.5 of the accompanying drawings where, although the brake pressure has returned to normal at time $t_2$, the pump motor remains energised until time $t_1$. During this relatively long period ($t_1$-$t_2$) the pump therefore is running and creating noise unnecessarily. The pump noise generated can be extremely annoying to the driver of the vehicle and it is one object of the present invention to provide an anti-skid braking system of the kind having a fluid return pump in which this problem is avoided.

In other known systems, instead of using a specially provided, relatively small, low-pressure reservoir to receive the dumped fluid, such dumped fluid is simply returned to the relatively large master cylinder reservoir. The pump then has to scavenge fluid back from this master cylinder reservoir to re-achieve the condition in which full braking is available. It will be appreciated that, unless told to stop, the pump will continue to pump the contents of the master cylinder reservoir back into the master cylinder circuit, where it is re-applied at a controlled rate by a solenoid in the valve means. A problem with the latter arrangement is that, while this large volume is being pumped back into the master cylinder circuit and is being released to the brakes at a slower, controlled rate, it will then pump fluid into the master cylinder itself, causing the brake pedal, and driver's foot, to be pumped backwards. In order to prevent the master cylinder pistons being completely pushed out of their bore, a switch is provided on the brake pedal which operates to turn off the pump if the pedal is pumped back to its rearmost position.

This effect of pushing back the brake pedal provides an undesirable pedal "feel" to the driver which many drivers find strange and do not like. It is therefore a second object of this invention to enable this effect to be removed.

In accordance with the present invention in its broadest aspect, at least on the first actuation of said valve means, the pump is energised for a period of selectable, relatively short length calculated to be sufficient to return previously dumped fluid to the master cylinder circuit.

By this means, a minimum pump run time can be obtained so as to pump back only, or substantially only, the previously dumped brake volume.

The provision of such a calculated pump period can apply to just the first or first few or any number of anti-lock cycles of an anti-lock stopping operation. Thus, it can apply to any individual pre-selected part of an anti-lock stop, e.g. to the first few actuations, or above or below any specific vehicle speed threshold, or indeed to the whole anti-lock stop, so that every solenoid dump time generates its minimum motor run period (which would normally cancel if there is a subsequent solenoid dump firing).

In one embodiment, at least on the first actuation of the valve means, the pump is energised for a relatively short period calculated as described above, and only if an incipient skid condition is prolonged is the period for which the pump is energised following each valve actuation extended to a relatively long period of fixed length.

Said relatively short period can be selected in dependence upon the length of time for which said valve means remains actuated and/or upon the vehicle deceleration or measured brake pressure.

Advantageously, the changeover from pump energisation for a relatively short period to pump energisation for a relatively long period is effected when a predetermined number of valve actuations has been exceeded.

The invention is applicable to multi-channel systems in which the respective channels are either hydraulically independent from one another (i.e. each channel includes its own master cylinder, valve means, reservoir and pump) or hydraulically related to one another (i.e. the channels share some common hydraulic components, e.g. the reservoir and the pump).

In the former case the pumps are either all driven by the same motor or, if separate motors are provided, the motors are controlled in common. With this arrangement the duration of relatively short period is calculated for each channel and the motor is stopped at the end of whichever relatively short period expires last.

In the latter case, since fluid from all the hydraulically dependent channels may be dumped into the shared reservoir, the motor is stopped after a period which is the sum of the relatively short periods calculated for each channel in which the valve means is actuated.

The invention is described further hereinafter, by way of example only, with reference to the accompanying drawings, in which:

Fig.1 is a block diagram showing, for the purposes of explanation, a simplified example of a brake system to which the present invention can be applied.,

Fig.2 is a partial flow chart illustrating software used in the system of Fig.1 in accordance with one embodiment of the invention;

Fig.3 is a block diagram of an embodiment of the invention including two hydraulically independent control channels;

Fig.4 is a block diagram of an embodiment of the invention using three control channels but in which the channels are hydraulically interrelated;

Fig.5 shows a set of operational curves illustrating the problem of excessive pump-generated noise in a prior art anti-skid system; and

Figs. 6 and 7 show sets of operational curves for anti-skid systems in accordance with the present invention corresponding respectively to cases involving solenoid firings on hydraulically independent and hydraulically related channels.

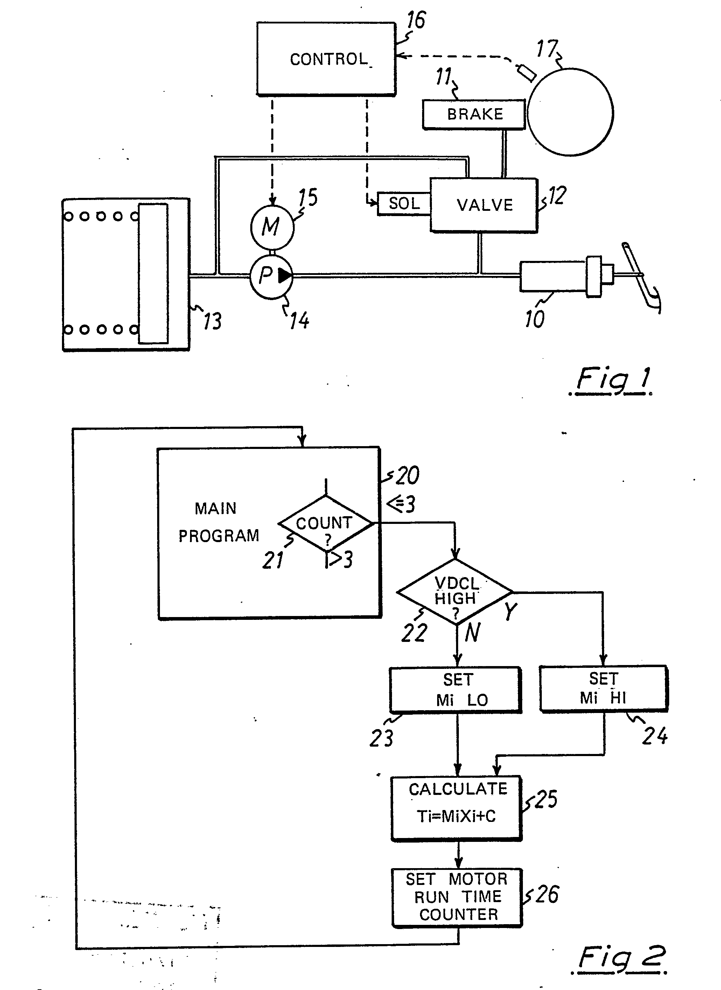

In Fig.1, the simplified single-channel system shown includes a conventional master cylinder 10 and slave cylinder 11 for applying the brake. These are connected together by a valve 12 as disclosed in EP-A-202845. This valve is solenoid operated and when not energised provides a direct connection between the master cylinder and the slave cylinder. When energised, the valve 12 substantially blocks this direct connection and also opens a connection to a low pressure reservoir 13. A pump 14 operable by an electric motor 15 connects the low pressure reservoir 13 to the master cylinder.

An electronic control circuit 16 controls the solenoid of the valve 12 and the motor 15. The control derives an input from a wheel speed transducer 17.

The control circuit 16 operates in known manner to monitor the rate of change of the frequency of the signals supplied thereto by the transducer 17. During braking, if the rate of this frequency exceeds a threshold, indicating that the wheel monitored is being decelerated too rapidly, the solenoid of the valve 12 is energised so that the connection between the master cylinder 10 and the slave cylinder is blocked or substantially blocked and the pressure in the slave cylinder is relieved by fluid being dumped from the slave cylinder into the reservoir 13. This permits rapid reduction of the braking effort. At the same time the motor 15 is energised so that the pump begins to run. When the control circuit 16 detects the resulting change in the rate of reduction of the frequency, the solenoid is de-energised again, but the motor 15 is not de-energised yet.

In a conventional system, each time the solenoid valve is energised, a software timer, with a fixed, relatively long period of about one second, is started and the motor is energised until this timer times out (see Fig.5). In a genuine anti-skid operation there will be a succession of actuations and de-actuations of the solenoid valve and the timer will be restarted on each actuation.

In systems in accordance with the present invention, instead of using such a fixed, relatively long period for the motor run time, a run-time is established by calculation such that, at least at the beginning of an anti-lock operation, the motor 15 is run only for a time necessary for the pump 14 to return to the master cylinder circuit the amount of fluid dumped to the low-pressure reservoir 13 during actuation of the valve means 12. As will be explained hereinafter, this is achieved by calculating a motor run time $T_i$ given by the equation:

$T_i = M_i X_i + C$

where $T_i$ is the motor run time, $X_i$ is a number proportional to the duration of the period of energisation of the solenoid valve 12, C is a constant added in certain conditions to allow for the run-up time of the motor 15 and $M_i$ is a variable modifying factor for $X_i$, which varies in dependence upon the measured or perceived vehicle decelration or brake pressure as described hereinafter.

The constant period "C" to allow for the motor run up time is set to zero if "T" is non-zero, i.e. if the motor is already running. On the other hand, if "T" is zero (the motor is not already running) then "C" is set to a fixed value, typically of the order of 100 ms. Thus, if the motor is running, then the next run period does not require a start up allowance. If the motor run time has elapsed between two consecutive dump cycles then of course the next motor run time will require the addition of the start up period "C". So,

in $T_i = M_i.X_i + C$

if $T_i = 0$ then $C > 0$, typically a value equivalent to 100 ms

if $T_i > 0$ then $C = 0$

Depending upon the accuracy or cost requirements of the system, the variable Mi can be selected or calculated in several different ways, as now described.

The vehicle deceleration is directly proportional to the brake pressure so that, in principle, either one or the other can be used to establish $M_i$. Vehicle deceleration "a" is limited by drag forces "Fd" and "Rd" at the front and rear wheels. If the vehicle mass is "M", then a simple balance equation is achieved, in that:

$M.a = Fd + Rd$

The front and rear drag forces are determined by their respective brake pressures and brake factors, i.e.

$Fd = Af.Pf$ and $Rd = Ar.Pr$

where Pf and Pr are the pressures and Af and Ar are the brake factors, i.e.

$$Af = \frac{2.piston\ areas.lining\ friction.effective\ disc\ radius}{wheel\ rolling\ radius}$$

A similar equation exists for Ar, where the rear brakes are drum brakes.

As it can be seen from the aforegoing, in the equation $M.a = Af.Pf + Ar\ Pr$ there are only two variables, all other terms ideally being constant; these variables are the vehicle deceleration "a" and the brake pressure "P". Therefore it can be concluded that the vehicle deceleration is proportional to the brake pressure and that the accuracy of the measured value of "a" determines the accuracy of the indicated value of "P". The latter theory is well known in the braking field.

Two options are then available when using the vehicle deceleration as an indication of the applied brake pressure. In a simple case, one can use a deceleration switch that switches at a point that indicates a change from a low mu condition to a high mu condition. This would provide a rather coarse indication of pressure, only being accurate at the point of switching. For example, a vehicle could decelerate at levels between 0 and 1g. With anti-lock in operation and the wheels making the maximum utilisation of the available road friction, an extremely low mu surface, i.e. polished ice, would produce a deceleration maximum of possibly 0.15g. Snow would produce a maximum deceleration of possibly 0.25g and loose gravel possibly 0.4g. Wet tarmac would be a mid range mu surface giving a maximum deceleration of between 0.4 g and 0.7g depending upon the amount of water on the surface. Dry tarmac and concrete would give a maximum deceleration of between 0.8 and 1.0g depending upon the surface structure. Thus, a deceleration switch set to operate at 0.5g would be satisfactory for predicting the brake pressure when providing anti-lock operation on wet tarmac but would not be very accurate when operating on snow or ice. Therefore, for a cheap, simple system, a deceleration switch could be used, as long as the system inaccuracies are accepted.

A better method of predicting the brake pressure is to use a decelerometer that can actually measure vehicle deceleration at all points between 0 and 1g. An even better method, of course, would be to physically measure the brake pressure using a switch, with the same inaccuracies as a deceleration switch, or a pressure transducer. Using this latter method, the complete calculation using deceleration can be avoided. Although the calculation itself is not difficult, the assumed constants, i.e. lining friction, are in fact variables which one has to assume as stable at a nominal value.

So, having established a way of determining the brake pressure, one can calculate the brake volume because the system stiffness (displacement per unit pressure is known. If one now dumps this pressure for a time '$X_i$' one can calculate the actual dumped volume. By combining the dumped volume with the constant 'pump output' one can arrive at a time required to return the dumped volume back to the system. The constant for pump output, system stiffness, etc. should be taken into account in '$M_i$' to give a variable which when multiplied by the dump time '$X_i$' gives the minimum motor run time.

As an example of the simpler version of the system described above, reference is now made to Fig.2 which illustrates the use of two possible values for $M_i$, determined by consideration of the dynamic characteristics of the system and contained in a look-up table within software. In this example, a fixed value of $M_i$ of 5 has been found to be adequate for most situations, although where a low deceleration condition exists a value of $M_i$ as low as 2 is sufficient.

Referring now to Fig.2, the system software is arranged to ensure that on at least the first and preferably the first few (for example three) actuations of the solenoid valve, the timer is set to a significantly shorter period than its normal value, this shorter period being calculated to be just sufficient to ensure that all of the previously dumped fluid has been returned from the low-pressure reservoir to the master cylinder circuit. To this end the main program loop 20 (Fig.2) includes a decision 21 based on whether or not the content of a software counter which counts the number of actuations of the solenoid is greater than 3. If this condition is met, then in this embodiment the software continues with its conventional mode of operation, i.e. setting the timer to a relatively long period of one second on each actuation. If the count is less than or equal to three then the software checks (22) whether the vehicle deceleration is above a certain value. According to the result of this check the constant Mi is set either to a low value (23) or to a high value (24). Next a calculation is carried out of the count $T_i$ to be loaded (26) into the timer counter using $T_i = M_i X_i + C$ as described above.

The resulting value of $T_i$ is now loaded (26) into the timer counter. The program then returns to the next iteration of the main program loop. The motor is de-energised when the timer counter reaches zero. The actuation counter is then reset to zero.

The two possible values of $M_i$ in this example are determined by consideration of the dynamic characteristics of the system and are contained in a look-up table within the software. A value of $M_i$ of typically 5 has been found to be adequate for most situations, although where a low deceleration condition exists a value as low as 2 may be sufficient.

These values were arrived at experimentally by adjusting $M_i$ between 1 and some higher number until a satisfactory minimum motor run time was achieved.

In other examples, instead of performing the considerable calculations each time a dump period is encountered, a variable "$m_i$" could be used (possibly having a value between 1 and say 6) which is proportional to either the vehicle deceleration or the measured brake pressure. Thus, for example, for

deceleration of 0.2g, $M_i$ would be set to say 2
deceleration of 1.0g, $M_i$ would be set to say 6
or for brake pressure

for a brake pressure = 10 bar, $M_i$ would be set to 2
for a brake pressure = 100 bar, $M_i$ would be set to 6

and all values between $M_i$ = 1 to 6 would be stored alongside values of deceleration between 0 and 1g or pressure between 0 and 100 bar in convenient look-up tables.

Furthermore, different values of $M_i$ may be used for front and rear wheels.

As mentioned hereinbefore, it is not essential for the routine to be applied only to the first or first few actuations of the motor and indeed the routine can be applied to every actuation if desired.

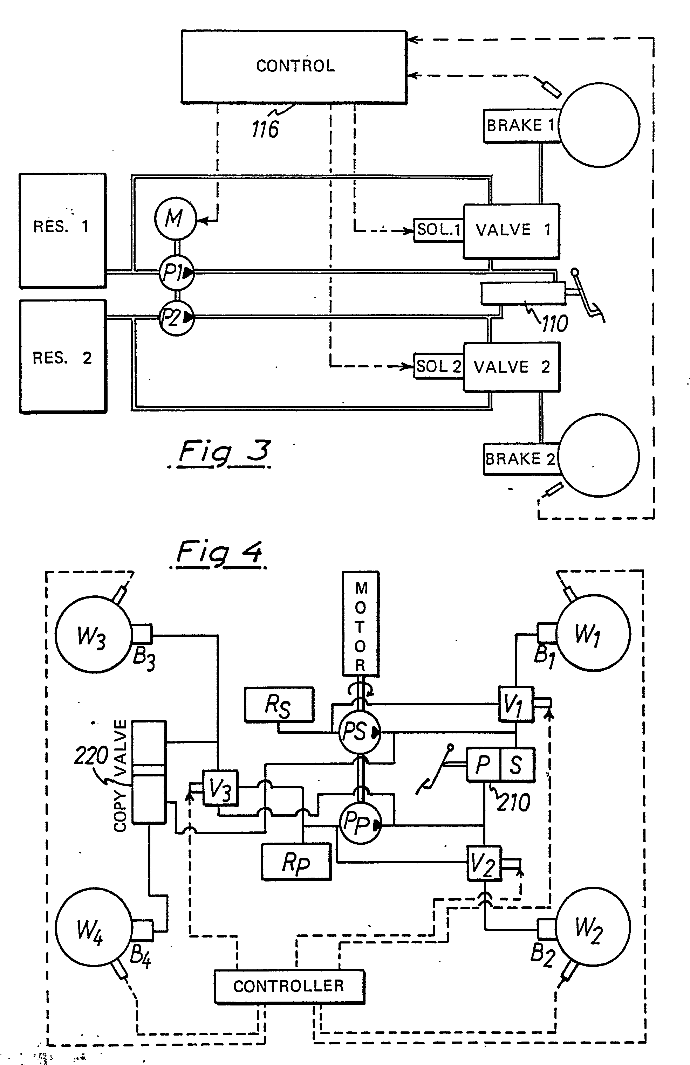

Fig.3 shows a two-channel hydraulically independent system. The master cylinder 110 is of the dual type with two separate outlets which feed two independent hydraulic channels each of which is identical to that shown in Fig.1. Two two pumps $P_1$ and $P_2$ have a common electric motor M.

The control circuit 116 controls the two valves independently, in accordance with the deceleration of the corresponding wheel. The software is modified in several respects. Firstly, a separate actuation count is accumulated for each channel and the decision 21 in Fig.2 is a decision as to whether any one of these counts exceeds three. The motor run time counter is only set to the newly calculated value Ti if this exceeds the current contents of the counter.

With this arrangement the motor is de-energised at the appropriate time interval following the last valve actuation to occur, during the period for which the motor is running. This situation is illustrated by the curves of Fig.6 wherein the pump motor is de-energised synchronously with the end of pump time $P_3$ calculated for the last valve actuation.

Turning now to Fig.4, a more complex braking system is shown therein. The master cylinder 210 is again of the dual type, but in this case there are three of the valves $V_1$, $V_2$, $V_3$ but only two reservoirs $R_s$, $R_p$ and two pumps $P_s$ and $P_p$ driven by the same motor. The fourth brake $B_4$ is controlled by a copy valve 220 of known construction which is itself controlled by the valve $V_3$. The copy valve 220 ensures that the $B_4$ brake pressure is maintained the same as the $B_3$ brake pressure, although the fluid which drives the $B_4$ brake is derived from the S-section of the master cylinder, whilst that which drives the $B_3$ brake is derived from the P-section of the master cylinder.

The two front brakes $B_1$ and $B_2$ are controlled by valves $V_1$ and $B_2$ associated respectively with the reservoirs $R_s$, $R_p$ and the pumps $P_s$, $P_p$. These two channels operate independently.

Whenever valve $V_3$ is actuated, however, the copy valve will also cause the release of the B4 brake, and fluid is dumped from the copy valve into the reservoir $R_p$.

The $B_1$ channel is hydraulically independent of the others, but the $B_2$, $B_3$ and $B_4$ channels are hydraulically related.

The software for this arrangement is modified such that the motor run times calculated for a valve $V_2$ actuation and for a valve $V_3$ actuation are added together to ensure that the motor run time is adequate to restore fluid to all the related channels. Thus, if during the same anti-skid operation, valve $V_2$ is actuated first and then the valve $V_3$ is actuated, then the values of $T_2$ and $T_3$ calculated for each channel (using the appropriate values of $M_2$, $M_3$, $X_2$ and $X_3$), are added together and it is this summated value which is loaded into the run time counter following the valve $V_3$ actuation. This situation is illustrated in Fig.7 wherein the pump motor is de-energised only after the expiry of the sum of the calculated pump times $P_2$ and $P_3$.

## Claims

1. An anti-skid braking system comprising an hydraulic master cylinder (10), at least one slave cylinder (11) for applying a brake, valve means (12) normally providing a direct connection between the master cylinder (10) and the slave cylinder (11) for normal braking operation, said valve means (12) being actuable so as to block or substantially block said direct connection, a reservoir (13), said valve means (12) when actuated providing a connection between the slave cylinder (11) and the reservoir (13), an electrically operable pump (14) for returning fluid from the reservoir (13) to the master cylinder (10) and control means (16) for said valve means (12) and said pump (14) which operates on detection of an incipient skid condition to actuate and to deactuate said valve means (12) repeatedly until said incipient skid condition no longer exists and to energise said pump (14), characterised in that, at least on the first actuation of said valve means (12), the pump (14) is energised for a variable period calculated to be sufficient to return previously dumped fluid to the master cylinder circuit.

2. An anti-skid braking system as claimed in claim 1, wherein the provision of said calculated period of energisation of the pump applies to only the first, or the first few, actuations of said valve means (12) in an anti-lock stopping operation.

3. An anti-skid braking system as claimed in claim 1, wherein the provision of said calculated period of energisation of the pump applies to every, or substantially every, actuation of the valve means (12).

4. An anti-skid braking system as claimed in claim 1, wherein, at least on the first actuation of the valve means (12), the pump is energised for said period calculated to be sufficient to return previously dumped fluid to the master cylinder circuit, whereas if said incipient skid condition is prolonged, the period for which the pump is energised following each actuation of the valve means (12) is extended to a fixed, relatively longer period.

5. An anti-skid braking system as claimed in claim 4, wherein the changeover from pump energisation for the relatively shorter, calculated period to pump energisation for the relatively longer, fixed period is effected when a predetermined number of actuations of the valve means (12) has been exceeded.

6. An anti-skid braking system as claimed in any of claims 1 to 5, wherein said variable, calculated period of energisation of the pump is variable in accordance with the length of time for which said valve means (12) remains actuated.

7. An anti-skid braking system as claimed in claim 6, wherein said variable, calculated period is also variable in accordance with the vehicle deceleration.

8. An anti-skid braking system as claimed in claim 6, wherein said variable, calculated period is also variable in accordance with the measured brake pressure.

9. An anti-skid system as claimed in any of claims 1 to 8 for multi-channel braking system of the type in which the respective channels are hydraulically independent of one another (i.e., each channel includes its own master cylinder, valve means, reservoir and pump, the various pumps being either all driven by the same motor or if separate motors are provided, the motors being driven in common) wherein the duration of said relatively shorter calculated period is established for each channel and the motor is arranged to be stopped at the end of whichever of the relatively shorter, calculated period expires last.

10. An anti-skid system as claimed in any of claims 1 to 8 for a multi-channel braking system of the type in which the respective channels are hydraulically related to one another (i.e. the channels share some common hydraulic components, such as the reservoir and pump, but wherein fluid from all the channels can be dumped into a single reservoir), wherein the or each pump is arranged to be stopped after a period which is the sum of the relatively shorter, calculated periods established for each channel in which the valve means (12) is actuated.

11. An anti-skid braking system comprising an hydraulic master cylinder (10), at least one slave cylinder (11) for applying a brake, valve means (12) normally providing a direct connection between the master cylinder (10) and the slave cylinder (11) for normal braking operation, said valve means (12) being actuable so as to block or substantially block said direct connection, a low pressure reservoir (13), said valve means (12) when actuated providing a connection between the slave cylinder (11) and the reservoir (13), an electrically operable pump (14) for returning fluid from the reservoir (13) to the master cylinder (10) and control means (16) for said valve means (12) and said pump (14) which operates on detection of an incipient skid condition to actuate and to deactuate said valve means (12) repeatedly until said incipient skid condition no longer exists and to energise said pump (14), characterised in that on at least the first actuation of said valve means (12) the pump (14) is energised for a relatively short period whereas if said incipient skid condition is prolonged, the period for which the pump (14) is energised following each actuation of the valve means (12) is extended to a relatively long period.

_Fig_1_

_Fig 2_

_Fig 3_

_Fig 4_

Fig 5.

Fig 6.

Fig 7.